# EUROPÄISCHE PATENTSCHRIFT

(11) **EP 3 969 797 B1**
(45) Veröffentlichungstag und Bekanntmachung des Hinweises auf die Patenterteilung: **15.03.2023**
(21) Anmeldenummer: 20728410.0
(22) Anmeldetag: 08.05.2020
(51) Int. Cl.: F16L 23/08

(54) **VORRICHTUNG ZUM VORPOSITIONIEREN EINER PROFILSCHELLE UND VERBINDUNGSSYSTEM**
DEVICE FOR PRE-POSITIONING A PROFILE CLAMP, AND CONNECTION SYSTEM
DISPOSITIF DE POSITIONNEMENT PRÉALABLE D'UN COLLIER PROFILÉ DE SERRAGE ET SYSTÈME DE RACCORDEMENT

(30) Priorität: 16.05.2019 DE 102019112884
(43) Veröffentlichungstag der Anmeldung: 23.03.2022
(73) Patentinhaber: NORMA Germany GmbH, 63477 Maintal (DE)
(72) Erfinder: JAROSZ, Mateusz, Newbury Berkshire RG19 6HW (GB); CARTER, Mark, Newbury Berkshire RG19 6HW (GB); WILLIAMS, Gary, Newbury Berkshire RG19 6HW (GB)
(74) Vertreter: Patentanwälte Olbricht Buchhold Keulertz
(86) Internationale Anmeldenummer: PCT/EP2020/062922
(87) Internationale Veröffentlichungsnummer: WO 2020/229360

(56) Entgegenhaltungen:
- WO-A1-2017/149104
- DE-A1-102014 002 659
- US-A1- 2018 094 755
- US-B2- 8 544 267

## Beschreibung

Die Erfindung betrifft eine Vorrichtung zum Vorpositionieren einer Profilschelle und ein Verbindungssystem.

Profilschellen werden verwendet, um Leitungen miteinander zu verbinden. Dazu werden die Profilschellen um Flansche der Leitungsendstücke der zu verbindenden Leitungen gelegt und verspannt. Zur Erleichterung des Verbindungsvorgangs soll eine Verdrehung einer ungespannten Profilschelle an dem Leitungsendstück vermieden werden. Damit verbleibt eine Spannvorrichtung der Profilschelle an einer definierten Position, so dass der Verbleib der Spannvorrichtung an einer gut zu erreichenden Position bewirkt wird. Weiter kann damit ein Abrutschen der Profilschelle von den Leitungsendstücken vermieden werden.

Dazu ist für Profilschellen mit zwei Schellenhälften, die mittels eines Gelenks miteinander verbunden sind, aus WO 2017/149104 A1 bekannt, dass das Gelenk einen Stift aufweist, der in ein mit einem Leitungsendstück verbundenen Bügel verbindbar ist. Der Bügel fixiert die Position der Profilschelle.

Als Aufgabe der Erfindung kann angesehen werden, eine verbesserte Vorrichtung zum Vorpositionieren einer Profilschelle bereitzustellen, die kostengünstiger und mit geringerem Aufwand herzustellen ist.

Hauptmerkmale der Erfindung sind im Anspruch 1 und 8 angegeben. Ausgestaltungen sind Gegenstand der Ansprüche 2 bis 7 und 9 bis 13.

Bei einer Vorrichtung zum Vorpositionieren einer Profilschelle zum Verbinden von Leitungsendstücken, wobei die Vorrichtung ein Brückenelement und ein Flanschelement, das dazu ausgelegt ist, an einem der Leitungsendstücke angeordnet zu sein, aufweist, wobei das Brückenelement zur Anordnung an die Profilschelle und zum Verbinden von zwei Schellenabschnitten der Profilschelle entlang einer Brückenrichtung ausgebildet ist, wobei das Brückenelement einen Finger aufweist, wobei der Finger sich zumindest teilweise quer zur der Brückenrichtung von dem Brückenelement weg erstreckt und einen freien Endabschnitt aufweist, ist erfindungsgemäß vorgesehen, dass das Flanschelement eine Ausnehmung zum Aufnehmen des freien Endabschnitts umfasst, wobei die Ausnehmung eine Bewegung des freien Endabschnitts entlang einer Umfangsrichtung des Flanschelements sperrt, wobei der Finger einen Federabschnitt aufweist, der zwischen dem Brückenelement und dem freien Endabschnitt angeordnet ist, wobei der Federabschnitt den freien Endabschnitt in einem ungespannten Zustand in einem größeren Abstand von dem Brückenabschnitt anordnet als in einem gespannten Zustand, in dem der freie Endabschnitt in der Ausnehmung angeordnet ist.

Mit der Erfindung wird ohne zusätzliche Teile an den zu verbindenden Leitungsendstücken eine Verbindung zwischen der Profilschelle und den Leitungsendstücken bereitgestellt, die eine radiale Verdrehung der Profilschelle an den zu verbindenden Leitungsendstücken vermeidet. Dazu ist an dem Flanschelement eines der beiden zu verbindenden Leitungsendstücke eine Ausnehmung vorgesehen, die den Finger des Brückenelements der Profilschelle aufnehmen kann. Wenn der freie Endabschnitt in der Ausnehmung angeordnet ist, wird der freie Endabschnitt des Fingers von der Ausnehmung entlang der Umfangsrichtung in Position gehalten. Der Finger ist dabei in Brückenrichtung starr ausgebildet, d. h. der Finger kann sich in Brückenrichtung nicht relativ zum Brückenelement bewegen. D. h. der Finger und damit die Profilschelle können sich dann entlang der Umfangsrichtung des Leitungsendstücks nicht bewegen und damit nicht um das Leitungsendstück verdreht werden. Es wird damit kein zusätzliches Element an dem Leitungsendstück benötigt, um eine Verdrehung um das Leitungsendstück zu sperren. Der freie Endabschnitt ist weiter mittels des Federelements in Bezug auf das Brückenelement federnd gelagert. Weiter treibt der Federabschnitt den freien Endabschnitt in die Ausnehmung, wenn der freie Endabschnitt in die Ausnehmung angeordnet wird. Dies bewirkt, dass der freie Endabschnitt in die Ausnehmung getrieben wird, sobald der freie Endabschnitt und die Ausnehmung miteinander fluchten, d. h. sobald eine Profilschelle in der entsprechenden Drehposition an dem Flanschelement angeordnet ist. Weiter wird der freie Endabschnitt in der Ausnehmung gehalten, sobald er in der Ausnehmung angeordnet wurde und die Profilschelle an dem Flanschelement angeordnet ist. Damit wird der Aufwand bei der Herstellung der Vorrichtung verringert. Weiter werden durch das eingesparte Element Kosten und Gewicht gespart.

Der Finger kann sich zumindest teilweise von dem Brückenelement in einer Axialrichtung der Profilschelle weg erstrecken.

Damit ragt der Finger von dem Brückenelement aus nicht unmittelbar zwischen die Schellenabschnitte einer Profilschelle. Damit wird ein Einklemmen des Fingers zwischen den Schellenabschnitten vermieden, wenn die Schellenabschnitte aufeinander zu bewegt werden. Damit sei jedoch nicht ausgeschlossen, dass der Finger sich in seinem späteren Verlauf zwischen die Schellenabschnitte erstrecken kann.

Weiter kann der freie Endabschnitt in einer Radialrichtung der Profilschelle das Brückenelement zumindest teilweise überdecken.

Ein weiterer Teil des freien Endabschnitts kann sich damit zu dem Brückenelement zurück erstrecken und die Schellenabschnitte umgreifen. Damit kann der Finger sich bis zu einem Flanschelement erstrecken, wenn das Brückenelement und der Flanschabschnitt überdeckend angeordnet sind.

Das Brückenelement und der Finger können einstückig ausgebildet sein.

Damit können der Finger und das Brückenelement einfach und kostengünstig in wenigen Produktionsschritten hergestellt werden. So kann das Brückenelement mit dem Finger z. B. aus einem Blech ausgestanzt werden, wobei der Finger danach mittels Biegevorgängen in seine endgültige Form gebracht wird.

Weiter kann die Ausnehmung eine Vertiefung im Flanschabschnitt sein, wobei die Vertiefung sich entlang einer Radialrichtung des Leitungsendstücks erstreckt.

Der freie Endabschnitt kann damit in Radialrichtung des Leitungsendstücks in die Ausnehmung eingeführt werden. Dies vereinfacht die Handhabung der Vorrichtung.

Die Ausnehmung kann in einer Umfangsrichtung des Leitungsendstücks von zwei gegenüberliegenden Wandelementen begrenzt werden, die einen Abstand aufweisen, der passend zu einer Breite des freien Endstücks ausgebildet ist.

Damit wird das freie Endstück in der Ausnehmung mittels der beiden Wandelemente in Umfangsrichtung des Leitungsendstücks formschlüssig in der Ausnehmung gehalten. Dies vermeidet effektiv eine Rotation der Profilschelle entlang der Umfangsrichtung des Leitungsendstücks.

Das Brückenelement kann dazu ausgelegt sein, einen Gelenkabschnitt zwischen den zwei Schellenabschnitten zu bilden.

Damit können die beiden Schellenabschnitte mittels des Brückenelements gegeneinander verschwenkt werden, um die Profilschelle zu öffnen. Weiter ist das Brückenelement damit multifunktional, da es den Finger aufweist, mit dem in Verbindung mit der Ausnehmung an dem Flanschelement eine Rotation der Profilschelle in Umfangsrichtung des Leitungsendstücks vermieden wird.

Die Erfindung betrifft weiter ein Verbindungssystem umfassend eine Profilschelle mit zwei Schellenabschnitten, ein Leitungsendstück und eine Vorrichtung nach einem der vorhergehenden Ansprüche, wobei die Vorrichtung die Profilschelle mit dem Leitungsendstück verbindet, wobei die Profilschelle das Brückenelement aufweist und das Leitungsendstück das Flanschelement umfasst.

Vorteile und Wirkungen sowie Weiterbildungen des Verbindungsystems ergeben sich aus den Vorteilen und Wirkungen sowie Weiterbildungen der oben beschriebenen Vorrichtung. Es wird daher in dieser Hinsicht auf die vorangegangene Beschreibung verwiesen.

Weiter kann der freie Endabschnitt in der Ausnehmung angeordnet sein, wenn die Profilschelle sich um das Flanschelement erstreckt.

Der freie Endabschnitt ist damit auch dann in der Ausnehmung angeordnet, wenn die Profilschelle sich im ungespannten Zustand um das Flanschelement erstreckt. Dies bewirkt bereits im ungespannten Zustand der Profilschelle eine Vorpositionierung.

Weiter kann das Brückenelement die zwei Schellenabschnitte miteinander verbinden.

Das Brückenelement kann in einer Radialrichtung der Profilschelle außen an der Profilschelle angeordnet sein.

Damit kann das Brückenelement bei der Herstellung der Profilschelle ohne großen Aufwand an den Schellenabschnitten befestigt werden, um die Schellenabschnitte miteinander zu verbinden.

Weiter kann sich der Finger zumindest teilweise zwischen die zwei Schellenabschnitte erstrecken.

Damit kann der Finger sich bis zu einem Flanschelement erstrecken, wenn das Brückenelement und der Flanschabschnitt überdeckend angeordnet sind.

In einer Radialrichtung der Profilschelle kann ein Abstand zwischen dem freien Endabschnitt und dem Brückenelement betragsweise zumindest einem Abstand entsprechen, der einer Verringerung eines Durchmessers der Profilschelle beim Spannen der Profilschelle entspricht.

Damit erstreckt sich der Finger mit dem freien Endabschnitt bis in die Ausnehmung, wenn die Profilschelle im ungespannten Zustand an dem Leitungsendstück angeordnet ist. Eine Verschiebung der Profilschelle in Radialrichtung um den Abstand, der einer Verringerung des Durchmessers der Profilschelle entspricht, führt den freien Endabschnitt damit nicht aus der Ausnehmung heraus.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1a-c: verschiedene Ansichten schematischer Darstellungen der Vorrichtung; und
- Fig. 2a, b: eine schematische Darstellung der Vorrichtung im ungespannten und gespannten Zustand.

Die Vorrichtung zum Vorpositionieren einer Profilschelle wird im Folgenden in ihrer Gesamtheit mit dem Bezugszeichen 10 bezeichnet.

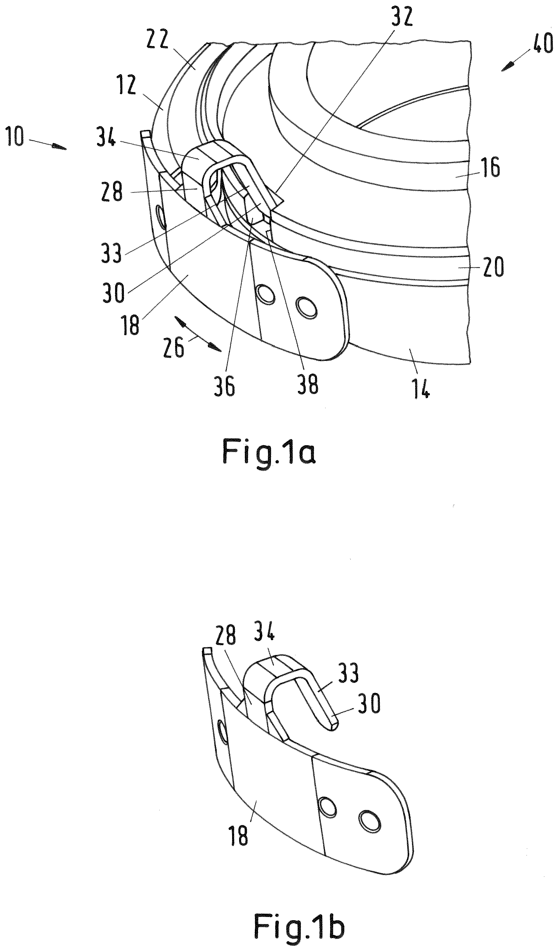

Die Vorrichtung 10 gemäß Figur 1a dient zum Vorpositionieren einer Profilschelle 12, die zum Verbinden von Leitungsendstücken 14,16 ausgebildet ist. Die Profilschelle 12 weist zwei Schellenabschnitte 22, 24 auf. Die Vorrichtung 10 weist dabei ein Brückenelement 18 einer Profilschelle 12 und ein Flanschelement 20 an einem der Leitungsendstücke 14, 16 auf.

Das Flanschelement 20 ist in Figur 1a an dem Leitungsendstück 16 angeordnet und mit diesem verbunden. Alternativ kann das jedoch ebenso an dem Leitungsendstück 14 angeordnet und mit diesem verbunden sein.

Das Flanschelement 20 weist eine Ausnehmung 32 auf, die sich entlang einer Radialrichtung des Leitungsendstücks 16 erstreckt. In Umfangsrichtung des Flanschelements 20 wird die Ausnehmung 32 durch die einander gegenüberliegenden Wandelemente 36, 38 begrenzt. Die Ausnehmung 32 kann dabei eine Vertiefung in dem Flanschelement 20 sein.

Das Brückenelement 18, das in Figur 1b näher dargestellt ist, verbindet dabei die beiden Schellenabschnitte 22, 24 der Profilschelle 12. Weiter ist das Brückenelement 18 in radialer Richtung der Profilschelle 12 außen an der Profilschelle 12 angeordnet.

Die Verbindung der beiden Schellenabschnitte 22, 24 erfolgt dabei in einer Brückenrichtung 26. D.h., dass sich das Brückenelement 18 entlang der Brückenrichtung 26 zwischen die beiden Schellenabschnitte 22, 24 erstreckt.

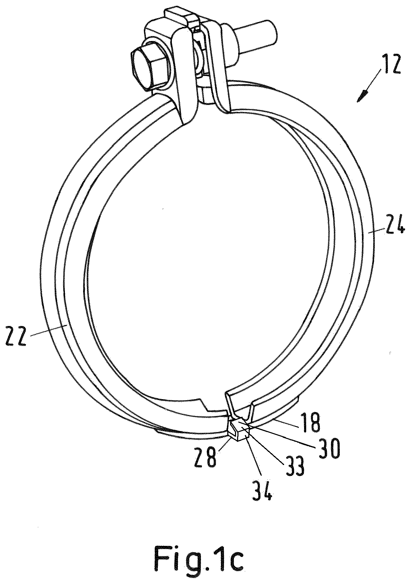

Das Brückenelement 18 ist ein Gelenkabschnitt zwischen den beiden Schellenabschnitten 22, 24. Die Schellenabschnitte 22, 24 können mittels des Brückenelements 18 gelenkig zueinander bewegt werden. Damit kann die Profilschelle 12, die in Figur 1c näher dargestellt ist, mittels des Brückenelements 18 geöffnet und geschlossen werden.

Weiter weist das Brückenelement 18 einen Finger 28 auf, der sich zumindest quer zu der Brückenrichtung 26 von dem Brückenelement 18 weg erstreckt. Entlang des Verlaufs des Fingers 28 kann sich die Erstreckungsrichtung des Fingers 28 ändern, d.h. die Erstreckungsrichtung, die der Finger 28 unmittelbar an der Verbindung mit dem Brückenelement 18 aufweist, kann sich entlang des Fingers 28 ändern.

Gemäß Figur 1b erstreckt sich der Finger 28 zunächst von dem Brückenelement 18 weg, um dann einen Richtungswechsel durchzuführen. Der Finger 28 weist dabei einen freien Endabschnitt 30 auf, der in eine andere Richtung weist, als die Erstreckungsrichtung des Fingers 28 unmittelbar an der Verbindung des Fingers 28 mit dem Brückenelement 18.

Zwischen dem freien Endabschnitt 30 und dem Brückenelement 18 weist der Finger 28 weiter einen Federabschnitt 34 auf. Der Federabschnitt 34 kann U-förmig ausgebildet sein. Ein Abschnitt 33 des Fingers 28 zwischen dem Federabschnitt 34 und dem freien Endabschnitt 30 kann dabei als Hebelarm fungieren, sodass bei einer Verschiebung der Position des freien Endabschnitts 30 quer zu dessen Erstreckungsrichtung der Federabschnitt 34 gespannt wird.

Das Brückenelement 18 und der Finger 28 können einstückig ausgebildet sein. D.h., dass bei der Herstellung des Brückenelements 18 gleichzeitig der Finger 28 hergestellt wird. Dazu kann zum Beispiel das Brückenelement 18 mit dem Finger 28 aus einem Blech ausgestanzt werden. Danach kann der Federabschnitt 34 des Fingers 28 ausgebildet werden. Dies kann durch eine Verbiegung des Fingers 28 bewirkt werden.

Wenn das Brückenelement 18 an der Profilschelle 12 angeordnet ist und die beiden Schellenabschnitte 22, 24 miteinander verbindet, erstreckt sich der Finger 28 zumindest teilweise in einer Axialrichtung der Profilschelle 12 von dem Brückenelement 18 weg. Weiter überdeckt der freie Endabschnitt 30 in einer Radialrichtung der Profilschelle 12 das Brückenelement 18 zumindest teilweise und erstreckt sich zumindest teilweise zwischen die beiden Schellenabschnitte 24, 26.

Der freie Endabschnitt 30 kann dabei durch die Ausnehmung 32 aufgenommen werden. Die beiden Wandelemente 36, 38 weisen dazu einen Abstand in Umfangsrichtung des Flanschelement 20 auf, der passend zu einer Breite des freien Endabschnitts 30 ausgebildet ist. Der Abstand zwischen den beiden Wandelementen 36, 38 kann dabei der Breite des freien Endabschnitts 30 entsprechen bzw. so groß ausgebildet sein, dass der freie Endabschnitt 30 in die Ausnehmung 32 eingeführt werden kann und einen Kontakt zu beiden Wandelementen 36, 38 herstellt.

Der freie Endabschnitt 30 wird daher in Umfangsrichtung des Flanschelements 20 von den beiden Wandelementen 36, 38 der Ausnehmung 32 fixiert. Damit wird gleichzeitig das Brückenelement 18 bzw. die Profilschelle 12 in Umfangsrichtung des Flanschelements 20 fixiert und damit an dem Leitungsendstück 16 vorpositioniert.

Die oben beschriebene Profilschelle 12 und das oben beschriebene Leitungsendstück 16 bilden mit der Vorrichtung 10 ein Verbindungssystem, das in seiner Gesamtheit mit dem Referenzzeichen 40 bezeichnet wird, wenn die Vorrichtung 10 die Profilschelle 12 mit dem Leitungsendstück 16 verbindet. Dabei kann der freie Endabschnitt 30 in der Ausnehmung 32 angeordnet sein, wenn die Profilschelle 12 sich um das Flanschelement 20 erstreckt.

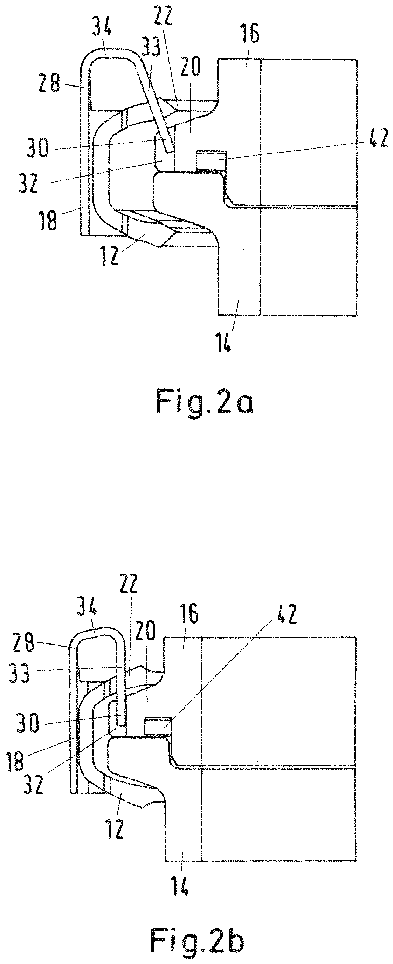

In den Figuren 2a und 2b sind verschiedene Zustände des Verbindungssystems 40 dargestellt. Die beiden Figuren 2a und 2b stellen eine Schnittdarstellung durch zwei miteinander gekoppelte Leitungsendstücke 14, 16 dar, zwischen denen eine Dichtung 42 angeordnet ist. Weiter ist die Profilschelle 12 um beide Leitungsendstücke 14, 16 und insbesondere um das Flanschelement 20 herum angeordnet.

In Figur 2a ist die Profilschelle 12 in einem ungespannten Zustand. Die Ausnehmung 32 und der Finger 28 sind dabei aneinander ausgerichtet, sodass der freie Endabschnitt 30 und die Ausnehmung 32 miteinander fluchten. Der Finger 28 ist so ausgebildet, dass der freie Endabschnitt 30 im ungespannten Zustand der Profilschelle 12 in der Ausnehmung 32 angeordnet ist. Der Abschnitt 33 zwischen dem freien Endabschnitt 30 und dem Federabschnitt 34 ist dabei zu einer Axialrichtung der Profilschelle geneigt angeordnet. Der Winkel des Abschnitts 33 kann beispielsweise zwischen 60° und 20° relativ zu der Axialrichtung der Profilschelle liegen, wenn der Federabschnitt 34 ungespannt ist.

In Figur 2a ist der freie Endabschnitt 30 in der Ausnehmung 32 angeordnet. Eine entlang der Umfangsrichtung des Flanschelements 20 verlaufende Wand der Ausnehmung 32 berührt den freien Endabschnitt 30. Dabei kann eine Kraft auf den freien Endabschnitt 30 wirken, die den freien Endabschnitt 30 um einen geringen Betrag in Richtung des Brückenelements 18 drückt. Dies bewirkt eine geringe Spannung des Federabschnitts 34. Der Federabschnitt 34 treibt dabei den freien Endabschnitt 30 in radialer Richtung der Profilschelle 12 zum Flanschelement 20 hin.

Beim Spannen der Profilschelle 12 wird der Durchmesser der Profilschelle 12 verkleinert, sodass der Abstand zwischen der Profilschelle 12 und dem Flanschelement 20 verringert wird. Dieser Zustand ist in Figur 2b dargestellt. Dabei wird durch die Verringerung des Durchmessers der Profilschelle 12 auch der Abstand des Brückenelements 18 zu dem Flanschelement 20 und damit zu der Ausnehmung 32 verringert. Dadurch wird der freie Endabschnitt 30 des Fingers 28 in radialer Richtung weiter in Richtung des Brückenelements 18 verschoben. Dies bewirkt eine Erhöhung der Spannung des Federabschnitts 34. Im Vergleich zu dem Zustand, der in Figur 2a dargestellt ist, ist der Finger 28 in Figur 2b verformt. Der Federabschnitt 34 treibt dabei den freien Endabschnitt 30 in Figur 2b mit einer größeren Kraft in Richtung des Flanschelements 20 in die Ausnehmung 32 als in dem Zustand in Figur 2a.

Damit entspricht ein Abstand in radialer Richtung der Profilschelle 12 zwischen dem freien Endabschnitt 30 und dem Brückenelement 18 betragsweise zumindest dem Abstand, der einer Verringerung des Durchmessers der Profilschelle 12 beim Spannen der Profilschelle 12 entspricht. Die Erfindung ist nicht auf eine der vorbeschriebenen Ausführungsformen beschränkt, sondern in vielfältiger Weise, innerhalb des Schutzbereiches der beigefügten Ansprüche, abwandelbar.

### Bezugszeichenliste

- 10: Vorrichtung
- 12: Profilschelle
- 14: Leitungsendstück
- 16: Leitungsendstück
- 18: Brückenelement
- 20: Flanschelement
- 22: Schellenabschnitt
- 24: Schellenabschnitt
- 26: Brückenrichtung
- 28: Finger
- 30: freier Endabschnitt
- 32: Ausnehmung
- 33: Abschnitt
- 34: Federabschnitt
- 36: Wandelement
- 38: Wandelement
- 40: Verbindungssystem
- 42: Dichtung

## Patentansprüche

1. Vorrichtung (10) zum Vorpositionieren einer Profilschelle (12) zum Verbinden von Leitungsendstücken (14, 16), wobei die Vorrichtung (10) ein Brückenelement (18) und ein Flanschelement (20), das dazu ausgelegt ist, an einem der Leitungsendstücke (14, 16) angeordnet zu sein, aufweist, wobei das Brückenelement (18) zur Anordnung an die Profilschelle (12) und zum Verbinden von zwei Schellenabschnitten (22, 24) der Profilschelle (12) entlang einer Brückenrichtung (26) ausgebildet ist, wobei das Brückenelement (18) einen Finger (28) aufweist, wobei der Finger (28) sich zumindest teilweise quer zur der Brückenrichtung (26) von dem Brückenelement (18) weg erstreckt und einen freien Endabschnitt (30) aufweist, **dadurch gekennzeichnet, dass** das Flanschelement (20) eine Ausnehmung (32) zum Aufnehmen des freien Endabschnitts (30) umfasst, wobei die Ausnehmung (32) eine Bewegung des freien Endabschnitts (30) entlang einer Umfangsrichtung des Flanschelements (20) sperrt, wobei der Finger (28) einen Federabschnitt (34) aufweist, der zwischen dem Brückenelement (18) und dem freien Endabschnitt (30) angeordnet ist, wobei der Federabschnitt (34) den freien Endabschnitt (30) in einem ungespannten Zustand in einem größeren Abstand von dem Brückenelement (18) anordnet als in einem gespannten Zustand, in dem der freie Endabschnitt (30) in der Ausnehmung (32) angeordnet ist.

2. Vorrichtung nach Anspruch 1, **dadurch gekennzeichnet, dass** der Finger (28) sich zumindest teilweise von dem Brückenelement (18) in einer Axialrichtung der Profilschelle (12) weg erstreckt.

3. Vorrichtung nach Anspruch 1 oder 2, **dadurch gekennzeichnet, dass** der freie Endabschnitt (30) in einer Radialrichtung der Profilschelle (12) das Brückenelement (18) zumindest teilweise überdeckt.

4. Vorrichtung nach einem der Ansprüche 1 bis 3, **dadurch gekennzeichnet, dass** das Brückenelement (18) und der Finger (28) einstückig ausgebildet sind.

5. Vorrichtung nach einem der Ansprüche 1 bis 4, **dadurch gekennzeichnet, dass** die Ausnehmung (32) eine Vertiefung im Flanschelement (20) ist, wobei die Vertiefung sich entlang einer Radialrichtung des Leitungsendstücks (16) erstreckt.

6. Vorrichtung nach einem der Ansprüche 1 bis 5, **dadurch gekennzeichnet, dass** die Ausnehmung (32) in einer Umfangsrichtung des Leitungsendstücks (16) von zwei gegenüberliegenden Wandelementen (36, 38) begrenzt wird, die einen Abstand aufweisen, der passend zu einer Breite des freien Endabschnitts (30) ausgebildet ist.

7. Vorrichtung nach einem der Ansprüche 1 bis 6, **dadurch gekennzeichnet, dass** das Brückenelement (18) dazu ausgelegt ist, einen Gelenkabschnitt zwischen den zwei Schellenabschnitten (22, 24) zu bilden.

8. Verbindungssystem umfassend eine Profilschelle (12) mit zwei Schellenabschnitten (22, 24), ein Leitungsendstück (16) und eine Vorrichtung (10) nach einem der vorhergehenden Ansprüche, wobei die Vorrichtung (10) die Profilschelle (12) mit dem Leitungsendstück (16) verbindet, wobei die Profilschelle (12) das Brückenelement (18) aufweist und das Leitungsendstück (16) das Flanschelement (20) umfasst.

9. Verbindungssystem nach Anspruch 8, **dadurch gekennzeichnet, dass** der Endabschnitt (30) in der Ausnehmung (32) angeordnet ist, wenn die Profilschelle (12) sich um das Flanschelement (20) erstreckt.

10. Verbindungssystem nach Anspruch 8 oder 9, **dadurch gekennzeichnet, dass** das Brückenelement (18) die zwei Schellenabschnitte (24, 26) miteinander verbindet.

11. Verbindungssystem nach Anspruch 10, **dadurch gekennzeichnet, dass** das Brückenelement (18) in einer Radialrichtung der Profilschelle (12) außen an der Profilschelle (12) angeordnet ist.

12. Verbindungssystem nach einem der Ansprüche 8 bis 11, **dadurch gekennzeichnet, dass** der Finger (28) sich zumindest teilweise zwischen die zwei Schellenabschnitte (24, 26) erstreckt.

13. Verbindungssystem nach einem der Ansprüche 8 bis 12, **dadurch gekennzeichnet, dass** in einer Radialrichtung der Profilschelle (12) ein Abstand zwischen dem freien Endabschnitt (30) und dem Brückenelement (18) betragsweise zumindest einem Abstand entspricht, der einer Verringerung eines Durchmessers der Profilschelle (12) beim Spannen der Profilschelle (12) entspricht.

## Claims

1. Device (10 for pre-positioning a profile clamp (12) for connecting line end pieces (14, 16), wherein the device (10) has a bridge element (18) and a flange element (20) , which is designed to be arranged on one of the line end pieces (14, 16), wherein the bridge element (18) is designed to be arranged on the profile clamp (12) and to connect two clamp portions (22, 24) of the profile clamp (12) along a bridge direction (26), wherein the bridge element (18) has a finger (28), wherein the finger (28) extends away from the bridge element (18) at least partly transversely to the bridge direction (26) and has a free end portion (30), **characterized in that** the flange element (20) comprises a recess (32) for receiving the free end portion (30), wherein the recess (32) blocks a movement of the free end portion (30) along a circumferential direction of the flange element (20), wherein the finger (28) has a spring portion (34), which is arranged between the bridge element (18) and the free end portion (30), wherein the spring portion (34) arranges the free end portion (30) at a greater distance from the bridge section (18) in an un-tensioned state than in a tensioned state, in which the free end portion (30) is arranged in the recess (32).

2. Device according to Claim 1, **characterized in that** the finger (28) extends at least partly away from the bridge element (18) in an axial direction of the profile clamp (12).

3. Device according to Claim 1 or 2, **characterized in that** the free end portion (30) at least partly overlaps the bridge element (18) in a radial direction of the profile clamp (12).

4. Device according to one of Claims 1 to 3, **characterized in that** the bridge element (18) and the finger (28) are formed in one piece.

5. Device according to one of Claims 1 to 4, **characterized in that** the recess (32) is a depression in the flange element (20), the depression extending along a radial direction of the line end piece (16).

6. Device according to one of Claims 1 to 5, **characterized in that** the recess (32) is delimited in a circumferential direction of the line end piece (16) by two opposite wall elements (36, 38), which are at a distance which is designed to match a width of the free end portion (30).

7. Device according to one of Claims 1 to 6, **characterized in that** the bridge element (18) is designed to form a joint portion between the two clamp portions (22, 24).

8. Connection system comprising a profile clamp (12) having two clamp portions (22, 24), a line end piece (16) and a device according to one of the preceding claims, wherein the device (10) connects the profile clamp (12) to the line end piece (16), wherein the profile clamp (12) has the bridge element (18) and the line end piece (16) comprises the flange element (20).

9. Connection system according to Claim 8, **characterized in that** the end portion (30) is arranged in the recess (32) when the profile clamp (12) extends around the flange element (20).

10. Connection system according to Claim 8 or 9, **characterized in that** the bridge element (18) connects the two clamp portions (24, 26) to each other.

11. Connection system according to Claim 10, **characterized in that** the bridge element (18) is arranged on the outside of the profile clamp (12) in a radial direction of the profile clamp (12).

12. Connection system according to one of Claims 8 to 11, **characterized in that** the finger (28) extends at least partly between the two clamp portions (24, 26).

13. Connection system according to one of Claims 8 to 12, **characterized in that** in a radial direction of the profile clamp (12), a distance between the free end portion (30) and the bridge element (18) corresponds in magnitude at least to a distance which corresponds to a reduction in a diameter of the profile clamp (12) when the profile clamp (12) is tensioned.

## Revendications

1. Dispositif pour prépositionner un collier profilé (12) pour raccorder des embouts de conduite (14, 16), le dispositif (10) présentant un élément de pont (18) et un élément de bride (20) qui est conçu pour être agencé sur l'un des embouts de conduite (14, 16), l'élément de pont (18) étant réalisé pour être agencé sur le collier profilé (12) et pour raccorder deux sections de collier (22, 24) du collier profilé (12) le long d'une direction de pont (26), l'élément de pont (18) présentant un doigt (28), le doigt (28) s'étendant au moins partiellement transversalement à la direction de pont (26) en s'éloignant de l'élément de pont (18) et présentant une section d'extrémité libre (30), **caractérisé en ce que** l'élément de bride (20) comprend un évidement (32) pour recevoir la section d'extrémité libre (30), l'évidement (32) bloquant un mouvement de la section d'extrémité libre (30) le long d'une direction circonférentielle de l'élément de bride (20), le doigt (28) présentant une section élastique (34), qui est agencée entre l'élément de pont (18) et la section d'extrémité libre (30), la section élastique (34) agençant la section d'extrémité libre (30) à une distance plus grande de l'élément de pont (18) dans un état non tendu que dans un état tendu dans lequel la section d'extrémité libre (30) est agencée dans l'évidement (32).

2. Dispositif selon la revendication 1, **caractérisé en ce que** le doigt (28) s'étend au moins partiellement en s'éloignant de l'élément de pont (18) dans une direction axiale du collier profilé (12).

3. Dispositif selon la revendication 1 ou 2, **caractérisé en ce que** la section d'extrémité libre (30) recouvre au moins partiellement l'élément de pont (18) dans une direction radiale du collier profilé (12).

4. Dispositif selon l'une quelconque des revendications 1 à 3, **caractérisé en ce que** l'élément de pont (18) et le doigt (28) sont réalisés d'une seule pièce.

5. Dispositif selon l'une quelconque des revendications 1 à 4, **caractérisé en ce que** l'évidement (32) est une cavité dans l'élément de bride (20), la cavité s'étendant le long d'une direction radiale de l'embout de conduite (16).

6. Dispositif selon l'une quelconque des revendications 1 à 5, **caractérisé en ce que** l'évidement (32) est délimité dans une direction circonférentielle de l'embout de conduite (16) par deux éléments de paroi opposés (36, 38) qui présentent une distance qui est réalisée pour être adaptée à la largeur de la section d'extrémité libre (30).

7. Dispositif selon l'une quelconque des revendications 1 à 6, **caractérisé en ce que** l'élément de pont (18) est conçu pour former une section d'articulation entre les deux sections de collier (22, 24) .

8. Système de raccordement comprenant un collier profilé (12) avec deux sections de collier (22, 24), un embout de conduite (16) et un dispositif (10) selon l'une quelconque des revendications précédentes, le dispositif (10) raccordant le collier profilé (12) à l'embout de conduite (16), le collier profilé (12) présentant l'élément de pont (18) et l'embout de conduite (16) comprenant l'élément de bride (20).

9. Système de raccordement selon la revendication 8, **caractérisé en ce que** la section d'extrémité (30) est agencée dans l'évidement (32) lorsque le collier profilé (12) s'étend autour de l'élément de bride (20).

10. Système de raccordement selon la revendication 8 ou 9, **caractérisé en ce que** l'élément de pont (18) raccorde les deux sections de collier (24, 26) entre elles.

11. Système de raccordement selon la revendication 10, **caractérisé en ce que** l'élément de pont (18) est agencé à l'extérieur du collier profilé (12) dans une direction radiale du collier profilé (12).

12. Système de raccordement selon l'une quelconque des revendications 8 à 11, **caractérisé en ce que** le doigt (28) s'étend au moins partiellement entre les deux sections de collier (24, 26).

13. Système de raccordement selon l'une quelconque des revendications 8 à 12, **caractérisé en ce que**, dans une direction radiale du collier profilé (12), une distance entre la section d'extrémité libre (30) et l'élément de pont (18) correspond en valeur absolue à au moins une distance qui correspond à une réduction d'un diamètre du collier profilé (12) lors du serrage du collier profilé (12) .
